# FASCICULE DE BREVET EUROPEEN

(11) **EP 1 021 314 B1**
(45) Date de publication et mention de la délivrance du brevet: **24.07.2002**
(21) Numéro de dépôt: 98946546.3
(22) Date de dépôt: 01.10.1998
(51) Int. Cl.: B60R 16/02

(54) **SYSTEME DE RACCORDEMENT D'UN MOTEUR ELECTRIQUE D'ACTIVATION D'UN ORGANE FONCTIONNEL DE VEHICULE AUTOMOBILE**
VERBINDUNGSSYSTEM EINES ELEKTRISCHEN MOTORS ZUR INBETRIEBSETZUNG EINER KRAFTFAHRZEUGBETÄTIGUNGSVORRICHTUNG
SYSTEM FOR CONNECTING AN ELECTRIC MOTOR ACTIVATING A MOTOR VEHICLE FUNCTIONAL ELEMENT

(30) Priorité: 08.10.1997 FR 9712557
(43) Date de publication de la demande: 26.07.2000
(73) Titulaire: Meritor Light Vehicle Systems-France, 92082 Paris La Defense 2 (FR)
(72) Inventeur: LAURANDEL, Hervé, F-14000 Caen (FR); VIAL, Jean-Charles, F-14220 Thury-Harcourt (FR)
(74) Mandataire: Habasque, Etienne Joel Jean-François
(86) Numéro de dépôt international: FR9802106
(87) Numéro de publication internationale: WO9917961

(56) Documents cités:
- DE-A- 4 212 261
- US-A- 4 789 343
- US-A- 5 011 426

## Description

La présente invention concerne un système de raccordement d'un moteur électrique d'activation d'un organe fonctionnel de véhicule automobile à un faisceau de conducteurs du reste de ce véhicule.

Les différents composants électriques d'un véhicule automobile sont généralement reliés à un ensemble de conducteurs électriques également appelé faisceau, qui s'étend dans l'ensemble de celui-ci.

Ce faisceau comporte une pluralité de conducteurs permettant de relier ces différents composants électriques à des organes de commande de ceux-ci et donc à l'alimentation électrique du véhicule.

Ceci est par exemple le cas des moteurs électriques d'activation d'organes fonctionnels du véhicule. Ces moteurs électriques sont adaptés pour piloter le déplacement d'organes mobiles de ce véhicule, tels que par exemple les vitres de celui-ci.

A cet effet, un tel moteur est intégré dans un mécanisme de lève-vitre et est raccordé au faisceau par l'intermédiaire de moyens de connexion complémentaires.

Dans l'état de la technique, on a proposé pour diverses raisons d'équiper les conducteurs correspondants du faisceau de moyens de connexion adaptés pour être engagés dans un connecteur complémentaire, lui-même engagé dans un puits de réception correspondant du moteur (voir par exemple le document US-A-4 789 343 qui décrit un système conforme au préambule de la revendication 1).

Le connecteur complémentaire engagé dans le puits du moteur permet d'obtenir une certaine étanchéité du moteur avant son montage dans le véhicule.

On conçoit cependant que cette structure présente un certain nombre d'inconvénients car elle nécessite l'utilisation d'un connecteur intermédiaire entre le connecteur du faisceau et le puits de connexion du moteur.

Le but de l'invention est donc de résoudre ces problèmes.

A cet effet, l'invention a pour objet un système de raccordement d'un moteur électrique d'activation d'un organe fonctionnel de véhicule automobile à un faisceau de conducteurs du véhicule, dans lequel le faisceau et le moteur comportent des moyens de connexion complémentaires, le faisceau portant un connecteur adapté pour être engagé directement dans un puits de connexion complémentaire du moteur, le connecteur et le puits comportant des moyens complémentaires de détrompage lors de l'engagement du connecteur dans ce puits, des moyens complémentaires d'étanchéité entre ce connecteur et ce puits et des moyens complémentaires de verrouillage/déverrouillage du connecteur en position dans le puits, caractérisé en ce que le puits du moteur est fixé à celui-ci et est associé à des moyens d'obturation temporaire de celui-ci avant montage du connecteur du faisceau dans ce puits.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant un système de raccordement selon l'invention; et
- la Fig.2 représente un exemple de réalisation de moyens complémentaires de connexion utilisés entre un faisceau et un moteur dans un système de raccordement selon l'invention.

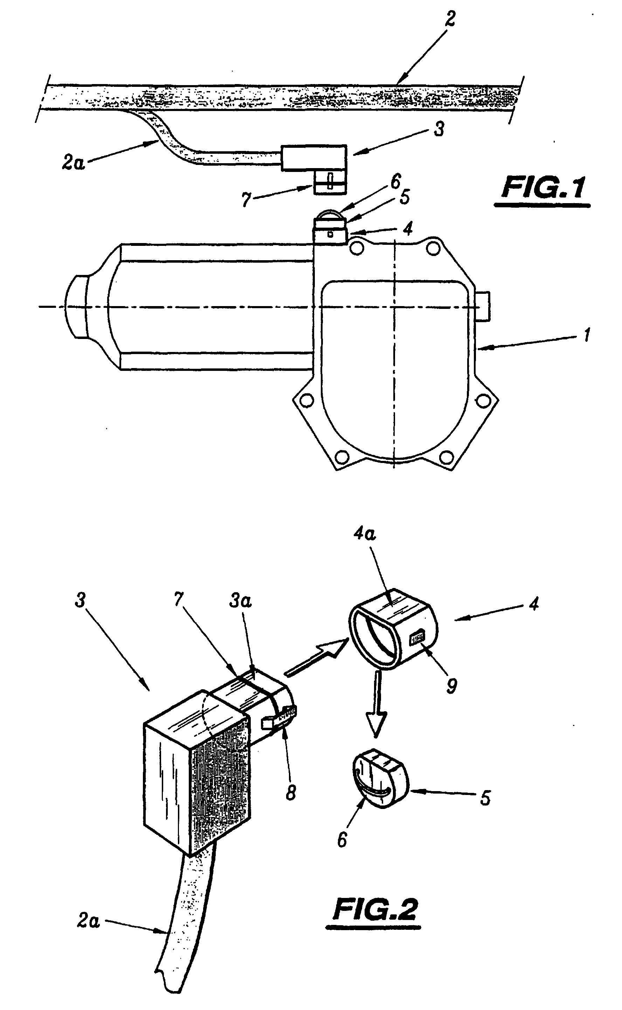

Comme on peut le voir sur ces figures 1 et 2, le système de raccordement selon l'invention permet de raccorder un moteur électrique d'activation d'un organe fonctionnel de véhicule automobile, désigné par la référence générale 1 sur cette figure 1, à un faisceau de conducteurs du reste de ce véhicule, désigné par la référence générale 2.

Ce faisceau peut présenter une structure classique et s'étendre dans le reste du véhicule.

Une branche 2a de ce faisceau est adaptée pour être reliée au moteur 1 et comporte à son extrémité, un connecteur désigné par la référence générale 3.

De façon classique, la branche 2a du faisceau et le connecteur 3 sont reliés de façon étanche.

Selon l'invention, ce connecteur est adapté pour être engagé directement dans un puits de connexion complémentaire 4 du moteur 1, ce connecteur 3 et ce puits 4 comportant comme cela sera décrit plus en détail par la suite, des moyens complémentaires de détrompage lors de l'engagement du connecteur dans le puits, des moyens complémentaires d'étanchéité entre ce connecteur et ce puits et des moyens de verrouillage/déverrouillage en position du connecteur dans le puits.

De plus, le puits 4 du moteur est associé à des moyens d'obturation temporaire de celui-ci avant montage du connecteur du faisceau dans ce puits.

Dans l'exemple de réalisation représenté sur ces figures 1 et 2, ces moyens d'obturation se présentent sous la forme d'un bouchon désigné par la référence générale 5 sur ces figures et qui est monté en position d'obturation du puits 4 du moteur lorsque celui-ci est livré par exemple chez un constructeur d'équipement.

Ces moyens d'obturation peuvent présenter n'importe quelle forme appropriée, être réalisés par exemple en matière plastique ou autre et être munis par exemple de moyens de manipulation 6 constitués par exemple par une poignée ou une languette de manoeuvre permettant à un opérateur de montage de retirer ce bouchon afin de permettre l'engagement du connecteur 3 du faisceau dans le puits 4 du moteur.

Dans l'exemple qui est décrit sur ces figures, ces moyens d'obturation sont donc des moyens escamotables par un opérateur. Ceux-ci peuvent alors être utilisés à nouveau ou recyclés.

Il va de soi bien entendu que d'autres modes de réalisation de ces moyens peuvent être envisagés et que ceux-ci peuvent par exemple comporter des moyens d'obturation frangibles lors de l'engagement du connecteur.

Une fois ces moyens dégagés, l'opérateur peut alors engager le connecteur 3 du faisceau dama le puits 4 du moteur pour assurer le raccordement de ce moteur au reste du faisceau.

A cet effet, ce connecteur 3 et le puits 4 peuvent comporter des moyens complémentaires de détrompage lors de cet engagement.

Ces moyens peuvent par exemple être constitués par des portions de formes complémentaires 3a et 4a de ce connecteur et de ce puits, pour ne permettre l'engagement du connecteur 3 dans le puits 4, que dans une seule position angulaire prédéterminée.

Dans l'exemple décrit, ces moyens de détrompage 3a et 4a sont constitués par des portions planes complémentaires de ces éléments.

Par ailleurs, il est également prévu des moyens complémentaires d'étanchéité entre le connecteur et le puits.

Dama l'exemple décrit, ces moyens complémentaires comprennent un joint torique d'étanchéité désigné par la référence générale 7 sur ces figures, porté par exemple par le connecteur 3 ou logé dans le puits 4 et adapté pour assurer l'étanchéité entre ce connecteur et ce puits, lorsque le connecteur est engagé dans le puits, afin d'éviter tout problème de dysfonctionnement de ce moteur, lié par exemple à des projections d'eau.

Enfin, le connecteur et le puits comportent des moyens complémentaires de verrouillage/déverrouillage en position du connecteur dans le puits, par exemple venus de matière avec ces éléments.

Ces moyens comprennent par exemple des crochets du connecteur tels que le crochet désigné par la référence générale 8 sur la figure 2, adaptés pour coopérer avec des surfaces de butée complémentaires par exemple 9 du puits, afin de permettre un verrouillage en position du connecteur dans le puits.

Bien entendu, les crochets sont par exemple déformables élastiquement pour être escamotables afin de permettre un déverrouillage du connecteur par rapport au puits, et donc un démontage du connecteur du faisceau de ce puits.

Il va de soi bien entendu que d'autres modes de réalisation de ces différents moyens peuvent être envisagés et que les crochets peuvent également être associés au puits.

Bien entendu, les broches de raccordement électrique du puits du moteur et du connecteur du faisceau peuvent présenter n'importe quelle forme appropriée connue.

On conçoit alors que le système de raccordement selon l'invention présente un certain nombre d'avantages par rapport aux systèmes de l'état de la technique dans la mesure où il permet de supprimer une pièce intermédiaire, c'est-à-dire par exemple un connecteur intermédiaire, qui dans l'état de la technique, était porté par le moteur et était adapté pour recevoir le connecteur du faisceau.

Dans le système de raccordement selon l'invention, après dégagement des moyens d'obturation temporaire du puits du moteur, le connecteur du faisceau est engagé directement dans le puits du moteur.

## Revendications

1. Système de raccordement d'un moteur électrique d'activation d'un organe fonctionnel de véhicule automobile à un faisceau de conducteurs du véhicule, dans lequel le faisceau (2) et le moteur (1) comportent des moyens de connexion complémentaires (3,4), le faisceau portant un connecteur (3) adapté pour être engagé directement dans un puits de connexion complémentaire (4) du moteur (1), le connecteur (3) et le puits (4) comportant des moyens complémentaires (3a,4a) de détrompage lors de l'engagement du connecteur dans ce puits, des moyens complémentaires d'étanchéité (7) entre ce connecteur et ce puits et des moyens complémentaires (8,9) de verrouillage/déverrouillage du connecteur en position dans le puits, **caractérisé en ce que** le puits (4) du moteur (1) est fixé à celui-ci et est associé à des moyens (5) d'obturation temporaire de celui-ci avant montage du connecteur du faisceau dans ce puits.

2. Système selon la revendication 1, **caractérisé en ce que** les moyens (5) d'obturation temporaire sont constitués par des moyens escamotables.

3. Système selon la revendication 2, **caractérisé en ce que** les moyens d'obturation comportent un bouchon d'obturation (5) muni de moyens de manipulation (6) par un opérateur.

4. Système selon la revendication 1, **caractérisé en ce que** les moyens d'obturation comprennent des moyens frangibles lors de l'engagement du connecteur dans le puits.

5. Système selon l'une quelconque des revendications précédentes, **caractérisé en ce que** les moyens complémentaires de détrompage comprennent des portions planes complémentaires (3a,4a) respectivement du connecteur (3) du faisceau et du puits (4) du moteur.

6. Système selon l'une quelconque des revendications précédentes, **caractérisé en ce que** les moyens complémentaires d'étanchéité comprennent un joint torique (7) porté par le connecteur (3).

7. Système selon l'une quelconque des revendications précédentes, **caractérisé en ce que** les moyens complémentaires de verrouillage/déverrouillage comprennent des crochets (8) déformables élastiquement de l'un des éléments, connecteur ou puits, adaptés pour coopérer avec des moyens complémentaires (9) de l'autre élément, puits ou connecteur.

## Claims

1. A system for connecting an electric motor which actuates a functional element of a motor vehicle to cable harness of the vehicle, in which the harness (2) and the motor (1) comprise complementary connector means (3, 4), the harness carries a connector (3) adapted to be engaged directly in a complementary connector socket (4) of the motor (1), the connector (3) and the socket (4) comprising complementary polarizing means (3a, 4a) for the engagement of the connector (3) in the socket (4), complementary sealing means (7) between the connector and the socket and complementary locking/release means (8, 9) for the connector positioned in the socket, **characterized in that** the socket (4) of the motor (1) is fixed to the latter and is associated with temporary blanking means (5) thereof before fitting the connector of the harness in the socket.

2. A system according to claim 1, **characterized in that** the temporary blanking means (5) are formed by retractable means.

3. A system according to claim 2, **characterized in that** the blanking means comprise a blanking plug (5) provided with means (6) for manipulation by an operator.

4. A system according to claim 1, **characterized in that** the blanking means comprise means which are ruptured during the engagement of the connector in the socket.

5. A system according to any of the preceding claims, **characterized in that** the complementary polarizing means comprise complementary plane portions (3a, 4a) of the connector (3) of the harness and of the socket (4) respectively.

6. A system according to any of the preceding claims, **characterized in that** the complementary sealing means comprise an O-ring (7) carried by the connector (3).

7. A system according to any of the preceding claims, **characterized in that** the complementary locking/release means comprise elastically deformable hooks (8) of one of the elements, the connector or the socket, adapted to cooperate with complementary means (9) of the other element, the socket or the connector.

## Patentansprüche

1. Verbindungssystem zur Verbindung eines elektrischen Motors zur Inbetriebsetzung eines Funktionsteils eines Kraftfahrzeugs mit einem Kabelbaum des Fahrzeugs, bei dem der Kabelbaum (2) und der Motor (1) komplementäre Verbindungsmittel (3, 4) aufweisen, der Kabelbaum einen Verbinder (3) trägt, der dazu ausgebildet ist, direkt in eine komplementäre Anschlußbuchse (4) des Motors (1) eingesetzt zu werden, der Verbinder (3) und die Buchse (4) komplementäre Mittel (3a, 4a) zum Verwechslungsschutz beim Einsetzen des Verbinders in die Buchse, komplementäre Dichtungsmittel (7) zwischen dem Verbinder und der Buchse und komplementäre Mittel (8, 9) zum Verriegeln/Entriegeln des Verbinders in seiner Position in der Buchse aufweisen, **dadurch gekennzeichnet, daß** die Buchse (4) des Motors (1) an diesem befestigt ist und daß ihr Mittel (5) zum vorübergehenden Verschließen derselben vor der Montage des Verbinders des Kabelbaums in der Buchse zugeordnet sind.

2. System nach Anspruch 1, **dadurch gekennzeichnet, daß** die Mittel (5) zum vorübergehenden Verschließen durch entfernbare Mittel gebildet werden.

3. System nach Anspruch 2, **dadurch gekennzeichnet, daß** die Verschlußmittel einen Verschlußstopfen (5) aufweisen, der mit Mitteln (6) zur Handhabung durch einen Monteur versehen ist.

4. System nach Anspruch 1, **dadurch gekennzeichnet, daß** die Verschlußmittel Mittel aufweisen, die beim Einsetzen des Verbinders in die Buchse zerbrechbar sind.

5. System nach einem der vorstehenden Ansprüche, **dadurch gekennzeichnet, daß** die komplementären Mittel zum Verwechslungsschutz jeweilige komplementäre flache Abschnitte (3a, 4a) des Verbinders (3) des Kabelbaumes und der Buchse (4) des Motors aufweisen.

6. System nach einem der vorstehenden Ansprüche, **dadurch gekennzeichnet, daß** die komplementären Dichtungsmittel einen Dichtring (7) aufweisen, der durch den Verbinder (3) gehalten ist.

7. System nach einem der vorstehenden Ansprüche, **dadurch gekennzeichnet, daß** die komplementären Mittel zur Verriegelung/Entriegelung elastisch verformbare Haken (8) eines der Elemente, Verbinder oder Buchse, aufweisen, die dazu ausgebildet sind, mit komplementären Mitteln (9) des anderen Elements. Buchse oder Verbinder, zusammenzuwirken.
